Europäisches Patentamt

European Patent Office

Office européen des brevets

(11) Publication number: **0 223 888**
**A1**

## (12) EUROPEAN PATENT APPLICATION

(21) Application number: 85308175.0

(22) Date of filing: 08.11.85

(51) Int. Cl.⁴: **C01B 33/28** , B01J 29/28

(43) Date of publication of application:
03.06.87 Bulletin 87/23

(84) Designated Contracting States:
BE DE FR GB IT NL SE

(71) Applicant: **MOBIL OIL CORPORATION**
**150 East 42nd Street**
**New York New York 10017(US)**

(72) Inventor: **Kuehl, Guenter Hinrich**
**1956 Cardinal Lake Drive**
**Cherry Hill New Jersey 08003(US)**

(74) Representative: **Cooper, John Anthony et al**
**Mobil Court 3 Clements Inn**
**London WC2A 2EB(GB)**

(54) Crystalline molecular sieves and their synthesis.

(57) A synthetic crystalline siliceous molecular sieve material has the structure of zeolite ZSM-5, zeolite ZSM-11 or zeolite ZSM-12 and contains aluminum and at least two elements selected from the group consisting of boron, gallium and iron in its anionic framework. The crystalline material has a composition on an anhydrous basis and in terms of moles of oxides per mole of silica expressed the the formula:

$$a\ R_{2/n}O : b\ Fe_2O_3 : c\ B_2O_3 : d\ Ga_2O_3 : e\ Al_2O_3 : SiO_2$$

wherein R is at least one cation having the valence n, and

$a = (1.0\pm0.2)(b+c+d+e)$

$b = 0$ to $0.05$

$c = 0$ to $0.05$

$d = 0$ to $0.05$

$e = 0.00003$ to $0.02$

$b+c+d+e = 0.005$ to $0.05$

$b+c+d$ is not less than $0.00047$

and wherein only one of b, c and d can be 0.

When in the ammonium form, the crystalline material has a TPAD (temperature-programmed ammonia desorption) peak of from greater than 300°C to less than 390°C and a TPAD half-height width from greater than 135°C to less than 155°C.

EP 0 223 888 A1

## CRYSTALLINE MOLECULAR SIEVES AND THEIR SYNTHESIS

This invention relates to crystalline molecular sieves and their synthesis.

Zeolitic materials, both natural and synthetic, have been demonstrated in the past to have catalytic properties for various types of hydrocarbon conversion. Certain zeolitic materials are ordered, porous crystalline aluminosilicates having a definite crystalline structure as determined by X-ray diffraction, within which there are a large number of smaller cavities which may be interconnected by a number of still smaller channels or pores. These cavities and pores are uniform in size within a specific zeolitic material. Since the dimensions of these pores are such as to accept for adsorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as rigid three-dimensional frameworks of $SiO_4$ and $AlO_4$ in which the tetrahedra are cross-linked by the sharing of oxygen atoms whereby the ratio of the total aluminum and silicon atoms to oxygen atoms is 1:2. The electrovalence of the tetrahedra containing aluminum is balanced by the inclusion in the crystal of a cation, for example an alkali metal or an alkaline earth metal cation. This can be expressed wherein the ratio of aluminum to the number of various cations, such as Ca/2, Sr/2, Na, K or Li, is equal to unity. One type of cation may be exchanged either entirely or partially with another type of cation utilizing ion exchange techniques in a conventional manner. By means of such cation exchange, it has been possible to vary the properties of a given aluminosilicate by suitable selection of the cation.

Prior art techniques have resulted in the formation of a great variety of synthetic aluminosilicate zeolites. The zeolites have come to be designated by letter or other convenient symbols, as illustrated by zeolite A (U. S. Patent 2,882,243), zeolite X (U. S. Patent 2,882,244), zeolite Y (U. S. Patent 3,130,007), zeolite ZK-5 (U. S. Patent 3,247,195), zeolite ZK-4 (U. S. Patent 3,314,752), zeolite ZSM-5 (U. S. Patent 3,702,886), zeolite ZSM-11 (U. S. Patent 3,709,979), zeolite ZSM-12 (U. S. Patent 3,832,449), zeolite ZSM-20 (U. S. Patent 3,972,983), zeolite ZSM-35 (U. S. Patent 4,016,245), zeolite ZSM-38 (U. S. Patent 4,046,859), and zeolite ZSM-23(U. S. Patent 4,076,842).

A crystalline boron-containing silicate having the structure of zeolite ZSM-5 is known from U.S. Patent 4,269,813. In addition, U.S. Patent 3,328,119 teaches a synthetic crystalline aluminosilicate containing a minor amount of boria in its crystal framework. Other U.S. patents relating to various metallosilicates include 3,329,480; 3,329,481 and 4,299,808. U.S. Patents 4,029,716 and 4,078,009 teach a crystalline aluminosilicate zeolite having a silica/alumina mole ratio of at least 12 and a Constraint Index within the range of 1 to 12 having combined therewith boron in an amount of at least 0.2 weight percent as a result of reaction of the zeolite with a boron-containing compound. U.S. Patent 4,331,641 teaches a method for preparing a crystalline boron-containing silicate having the structure of zeolite ZSM-5 from a reaction mixture containing less than 100 ppm aluminum.

A crystalline iron-containing silicate having the structure of zeolite ZSM-5 is known from U.S. Patent 4,208,305, whereas U.S. Patent 4,238,318 discloses the use of the iron-containing silicate of U.S. Patent 4,208,305 as catalyst component for preparing aromatic hydrocarbons from a feedstock comprising acyclic organic compounds such as methanol. Crystalline iron-containing silicates are used in U.S. Patent 4,244,807 for reforming and in U.S. Patent 4,329,233 for purifying water.

According to one aspect of present invention, there is provided a synthetic crystalline siliceous molecular sieve material having the structure of zeolite ZSM-5, zeolite ZSM-11 or zeolite ZSM-12 and containing aluminum and at least two elements selected from the group consisting of boron, gallium and iron in its anionic framework, said crystalline material having a composition on an anhydrous basis and in terms of moles of oxides per mole of silica expressed the the formula:

$$a\ R_{2/n}O : b\ Fe_2O_3 : c\ B_2O_3 : d\ Ga_2O_3 : e\ Al_2O_3 : SiO_2$$

wherein R is at least one cation having the valence n, and

$a = (1.0\pm0.2)(b+c+d+e)$

$b = 0$ to $0.05$

$c = 0$ to $0.05$

$d = 0$ to $0.05$

$e = 0.00003$ to $0.02$

$b+c+d+e = 0.005$ to $0.05$

b + c + d is not less than 0.00047
and wherein only one of b, c and d can be 0, and said crystalline material having, when in the ammonium form, a TPAD (temperative-programmed ammonia desorption) peak of from greater than 300°C to less than 390°C and a TPAD half-height width from greater than 135°C to less than 155°C.

According to a further aspect of the invention, there is provided a method for synthesizing a crystalline siliceous molecular sieve material having the structure of zeolite ZSM-5, zeolite ZSM-11, or zeolite ZSM-12 and containing aluminum and at least two elements selected from the group consisting of boron, gallium and iron in its anionic framework which comprises
preparing a mixture containing a source of organic cations, a source of silica, a source of alumina, a source of alkali or alkaline earth metal ions, water and sources of oxides of at least two metals selected from the group consisting of boron, gallium and iron, said mixture having a composition, in terms of moles of oxides, within the following ranges:

$OH^-/SiO_2$ = 0.02 to 0.85
$H_2O/OH^-$ = 10 to 800
$SiO_2/Al_2O_3$ = 75 to 100,000
$Q/(Q + M)$ = 0.05 to 0.90
when boron source present,
$SiO_2/B_2O_3$ = 4 to 600
when gallium source present,
$SiO_2/Ga_2O_3$ = 25 to 2,500
when iron source present,
$SiO_2/Fe_2O_3$ = 25 to 2,500

wherein Q represents organic cations and M represents alkali or alkaline earth metal ions,
maintaining said mixture until said crystalline material is formed at a temperature of from 80°C to 200°C for a time of from 40 hours to 30 days, and
recovering said crystalline material having a composition on an anhydrous basis and in terms of moles of oxides per mole of silica expressed by the formula:

$$a R_{2/n}O : b Fe_2O_3 : c B_2O_3 : d Ga_2O_3 : e Al_2O_3 : SiO_2$$

wherein R is at least one cation having the valence n and

a = (1.0±0.2)(b + c + d + e)
b = 0 to 0.05
c = 0 to 0.05
d = 0 to 0.05
e = 0.00003 to 0.02
b + c + d + e = 0.0005 to 0.05
b + c + d is not less than 0.00047
and wherein only one of b, c and d can be 0,
and said crystalline material having, when in the ammonium form, a TPAD (temperature-programmed ammonia desorption) peak of from greater than 300°C to less than 390°C and a TPAD half-height width of from greater than 135°C to less than 155°C.

The crystalline metallosilicate of this invention is a unique composition of matter which exhibits a valuable combination of catalytic and hydrophilic properties which distinguishes it from aluminosilicates, boron-containing silicates, gallium-containing silicates and iron-containing silicates of any known structure.

It is known that catalytic activity and hydrophilic properties of aluminosilicates decrease with increased silica/alumina mole ratios. It is also known that certain aluminosilicates, e.g. mordenite, beta and ZSM-35, become more difficult to synthesize as the mole ratio of silica/alumina in the crystallization mixture is increased. It is noted that boron-containing silicates (M. Taramasso et al, Proceedings of the Fifth International Conference on Zeolites, Heyden & Son Ltd., 1980, pp. 40-48) having the structure of zeolites ZSM-5, ZSM-11 and Beta can be prepared, but, like the corresponding aluminosilicate, the hydrophilic properties thereof may be decreased by increasing the silica/boria mole ratio.

The metallosilicate molecular sieve material of this invention, however, overcomes the potential problems associated with high silica/alumina mole ratio aluminosilicates and with borosilicates and ferrosilicates in that the present material exhibits a controlled acid strength and hydrophilic properties distinguishing it from known aluminosilicates, borosilicates, gallosilicates and ferrosilicates.

In this respect, it is important not to confuse the concentration of acid sites with the acid strength of a site. The present invention enables the acid strength of a synthetic crystalline molecular sieve material to be tailored or controlled in its synthesis. Acid activity measured by Alpha Value, hereinafter more particularly defined, can be altered downward by (1) steaming a higher Alpha zeolite, by (2) crystallization of the zeolite

with a higher $SiO_2/Al_2O_3$ mole ratio or by (3) crystallization of the zeolite as a metalloaluminosilicate, the metal other than aluminum taking the place of aluminum in the zeolite structure. Method (3) may provide a product zeolite having the same number of acid sites as the product zeolite of method (1), but their acid strength is lower. Alpha Value correlates with the number of acid sites only when the acid strength of those sites is constant and sufficiently high to catalyze the cracking of n-hexane. It is believed that controlling acid-strength by the present invention will provide a more selective catalyst than is obtainable by steaming a higher Alpha Value zeolite.

It is noted that the difference in zeolite acid site density is equivalent to the concentration of an aqueous acid solution, e.g. a solution of $H_2SO_4$, which can be titrated. The difference in acid strength is equivalent to difference in pK values of aqueous acids, e.g. "strong" acids such as $H_2SO_4$, $HNO_3$ and $HCl$, "medium strong" acids such as $H_3PO_4$, and "weak" acids such as $H_3BO_3$, $H_2CO_3$ and $H_4SiO_4$, which can be measured by the pH at which these acids are neutralized (titration curve), or, conversely, by the temperature at which the acid releases a volatile base, e.g. $NH_3$, indicating the strength with which the acid holds the base, e.g. as $NH_4^+$.

While not wishing to be bound by any particular theory of operation, it has been noted that depending on the ratio of Si/Al in the crystal framework of a zeolite, the influence of Si-O on the Al-O bond length may be larger or smaller. A shortening of the Al-O bond, as happens as the $SiO_2/Al_2O_3$ ratio increases, results in a stronger acid, but the number of acid sites ($H^+$-ion concentration) decreases. In a framework aluminosilicate, such as a zeolite ZSM-11 synthesized as in U.S. Patent 3,709,979, the acid strength of the proton associated with an $AlO_4^-$ tetrahedron correlates with the Al-O bond length. The longer the bond, the weaker is the acid; the shorter the bond, the stronger is the acid. Since there is a certain narrow range of Al-O bond lengths within a structure, there is a corresponding range of acid strengths.

Information on the relative acid strengths can be obtained by following the desorption of ammonia from an ammonium zeolite upon heating with a constant heating rate, e.g. 10°C/minute. The desorbed ammonia is continually purged from the thermogravimetric unit with helium and absorbed from a gas stream in boric acid/$NH_4Cl$, where it is continuously titrated with sulfamic acid using an automated titrator (G.T. Kerr and A.W. Chester, Thermochim. Acta., 1971, 3, 113). The rate at which the titrant is added is recorded as a function of the sample temperature. The temperature at which the rate of ammonia evolution reaches a maximum, the temperature-programmed ammonia desorption (TPAD) peak temperature, is a measure of the acid strength of the zeolite acid, since a weaker acid would release $NH_3$ at a lower temperature, a stronger acid at a higher temperature.

Whereas an aluminosilicate ZSM-11 of $SiO_2/Al_2O_3$ molar ratio of 75 shows the TPAD peak at 380°C, a zeolite of ZSM-11 structure having a $SiO_2/(Al_2O_3 + Fe_2O_3)$ molar ratio of 68 and a Fe/(Fe + Al) atomic ratio of 0.92 gives a TPAD peak at 315°C, and a zeolite of ZSM-11 structure having a $SiO_2/(Al_2O_3 + Fe_2O_3)$ molar ratio of 73 and a Fe/(Fe + Al) atomic ratio of 0.5 gives a TPAD peak at 335°C.

The widths of the TPAD peaks at half-height for various zeolite samples are measured and found to be 138°C for the aluminosilicate ZSM-11, 148°C for the sample with Fe/(Al + Fe) = 0.92 and 148°C for the sample containing Fe and Al in the ratio of about 1:1, i.e. Fe/(Al + Fe) = 0.5.

It is concluded from these results that the bond lengths of Fe-O, Ga-O and Al-O are modified by their influence in the crystal structure upon one another resulting in essentially one common acid strength intermediate to those of the pure Al-, pure Ga-and pure Fe-silicates.

Therefore, the TPAD peak with temperature and half-height width and the Alpha activity indicate that mixed metallosilicates have acid strength intermediate to ferrosilicate, gallosilicate or borosilicate and aluminosilicate, and the acid strength is modified by the mutual effect of the Al-O, Ga-O, B-O and Fe-O bonds on their length. This observation allows the conclusion that the acid sites of the presently synthesized acid strenth-tailored zeolite do not behave like hydrogen sites on aluminosilicate (stronger) or like hydrogen sites on ferrosilicates, gallosilicates or borosilicates (weaker), but a new type of acid site is unexpectedly formed.

The physical structure of the metallosilicate of this invention containing aluminum and two or three of boron, gallium and iron in tetrahedrally coordinated structural positions may be that zeolite ZSM-5, ZSM-11 or ZSM-12. U.S. Patents 3,702,886 and Re. 29,948 describe ZSM-5 and its distinguishing X-ray diffraction pattern whereas corresponding disclosure of ZSM-11 and ZSM-12 is contained in U.S. Patent Nos. 3,709,979 and 3,832,449 respectively.

The acid-strength tailored metallosilicate of the present invention can be beneficially thermally treated, either before or after ion exchange. This thermal treatment is performed by heating the crystalline material in an atmosphere such as air, nitrogen, hydrogen, steam, etc, at a temperature of from about 370°C to about 1100°C for from about 1 minute to about 20 hours. While subatmospheric or superatmospheric

4

pressures may be used for this thermal treatment, atmospheric pressure is desired for reasons of convenience. It may be desirable in certain instances to conduct this thermal treatment at from about 370°C to about 750°C, but the structure of the acid-strength tailored material hereof should be stable up to about 1100°C.

In general, the acid strength-tailored metallosilicate of the present invention can be prepared from a reaction mixture containing a source of cations, such as, for example, organic nitrogen-containing cations, an alkali or alkaline earth metal ion source, a source of silicon, such as, for example, a silicate, a source of aluminum, such as, for example, an aluminate and water. Additionally, the reaction mixture will contain two or three sources of boron, gallium and iron, such as, for example an oxide of boron, e.g. a borate or boric acid, an iron salt and a gallium salt. The reaction mixture will have a composition, in terms of mole ratios of oxides, within the following ranges:

|  | Broad | Preferred |
|---|---|---|
| $OH^-/SiO_2$ | 0.02 to 0.85 | 0.04 to 0.65 |
| $H_2O/OH^-$ | 10 to 800 | 20 to 600 |
| $SiO_2/Al_2O_3$ | 75 to 100,000 | 150 to 50,000 |
| $Q/(Q+M)$ | 0.05 to 0.90 | 0.05 to 0.80 |
| when boron source present, | | |
| $SiO_2/B_2O_3$ | 4 to 600 | 10 to 200 |
| when gallium source present, | | |
| $SiO_2/Ga_2O_3$ | 25 to 2,500 | 35 to 1,000 |
| when iron source present, | | |
| $SiO_2/Fe_2O_3$ | 25 to 2,500 | 35 to 1,000 |

wherein Q represents organic cations and M represents alkali or alkaline earth metal ions.

Reaction conditions comprise heating the foregoing reaction mixture to a temperature of from 80°C to 200°C for a period of time of from 40 hours to 30 days. A more preferred temperature range is from 100°C to 180°C with the amount of time at a temperature in such range being from 60 hours to 15 days.

The digestion of the gel particles is carried out until crystals of the desired acid strength-tailored metallosilicate form. The crystalline product is recovered by separating same from the reaction medium, as by cooling the whole to room temperature, filtering and washing at conditions including a pH above 7.

The above reaction mixture composition can be prepared utilizing materials which supply the appropriate oxides. Such compositions may include sodium silicate, silica hydrosol, silica gel, silicic acid, sodium hydroxide, a source of aluminum, a source of boron, a source of gallium, a source of iron and an appropriate organic compound. The source of aluminum may be an added aluminum-containing compound or silica-containing materials or alkali metal-containing materials containing aluminum. The source of iron may be an iron salt such as, for example, ferric sulfate. The source of gallium may be a gallium salt such as, for example, gallium chloride. The organic compounds act as directing agents and contain an element of Group VA, such as nitrogen or phosphorus. Primary organic amines containing from 2 to 10 carbon atoms or organic ammonium compounds such as tetraalkylammonium compounds in which the alkyl contains from 2 to 5 carbon atoms will direct the formation of metallosilicate having the structure of zeolite ZSM-5 from the above reaction mixture under appropriate conditions. The quaternary compounds of tetrabutylammonium chloride or hydroxide may be used to direct synthesis under appropriate conditions of metallosilicate having the structure of ZSM-11. One or more alkylenediamines having from 7 to 12 carbon atoms (see U.S. Patent 4,108,881), may be also used to direct synthesis of a metallosilicate having the structure of ZSM-11. Tetraethylammonium cation sources may be used to direct synthesis of metallosilicate having the structure of ZSM-12 under appropriate conditions.

In particular, when metallosilicate having the structure of zeolite ZSM-5 is desired, the reaction mixture will have a composition, in terms of mole ratios of oxides, within the following ranges:

|  | Broad | Preferred |
|---|---|---|
| $OH^-/SiO_2$ | 0.02 to 0.70 | 0.04 to 0.60 |
| $H_2O/OH^-$ | 10 to 400 | 20 to 300 |
| $SiO_2/Al_2O_3$ | 100 to 100,000 | 200 to 50,000 |
| $Q/(Q+M)$ | 0.05 to 0.90 | 0.05 to 0.80 |
| when boron source provided, $SiO_2/B_2O_3$ | 4 to 300 | 20 to 200 |
| when gallium source provided, $SiO_2/Ga_2O_3$ | 25 to 2,500 | 35 to 1,000 |
| when iron source provided, $SiO_2/Fe_2O_3$ | 25 to 2,500 | 35 to 1,000 |

wherein Q and M are as above defined and wherein at least two of the boron, gallium and iron sources are present. Reaction conditions will include a temperature of from 80°C to about 200°C, preferably from 100°C to 180°C, for a time of from 40 hours to 30 days, preferably from about 60 hours to 15 days.

When metallosilicate having the structure of zeolite ZSM-11 is desired, the reaction mixture will have a composition, in terms of mole ratios of oxides, within the following ranges:

|  | Broad | Preferred |
|---|---|---|
| $OH^-/SiO_2$ | 0.02 to 0.80 | 0.04 to 0.50 |
| $H_2O/OH^-$ | 25 to 800 | 50 to 600 |
| $SiO_2/Al_2O_3$ | 100 to 100,000 | 200 to 50,000 |
| $Q/(Q+M)$ | 0.05 to 0.80 | 0.05 to 0.70 |

when boron source provided,

| | | |
|---|---|---|
| $SiO_2/B_2O_3$ | 4 to 300 | 20 to 200 |

when gallium source provided,

| | | |
|---|---|---|
| $SiO_2/Ga_2O_3$ | 25 to 2,500 | 35 to 1,000 |

when iron source provided,

| | | |
|---|---|---|
| $SiO_2/Fe_2O_3$ | 25 to 2,500 | 35 to 1,000 |

wherein Q and M are as above defined and at least two of the boron, gallium and iron sources are present. Crystallization temperatures will be from 80°C to 160°C, preferably from 100°C to 140°C, and times are from 40 hours to 30 days, preferably from 60 hours to 15 days.

When metallosilicate having the structure of zeolite ZSM-12 is desired, the reaction mixture will have a composition, in terms of mole ratios of oxides, within the following ranges:

|  | Broad | Preferred |
|---|---|---|
| $OH^-/SiO_2$ | 0.10 to 0.85 | 0.15 to 0.65 |
| $H_2O/OH^-$ | 20 to 300 | 30 to 200 |
| $SiO_2/Al_2O_3$ | 75 to 100,000 | 150 to 6,000 |
| $Q/(Q+M)$ | 0.20 to 0.90 | 0.30 to 0.75 |

when boron source provided,

| $SiO_2/B_2O_3$ | 5 to 600 | 10 to 200 |

when gallium source provided,

| $SiO_2/Ga_2O_3$ | 30 to 2,500 | 50 to 1,000 |

when iron source provided,

| $SiO_2/Fe_2O_3$ | 30 to 2,500 | 50 to 1,000 |

wherein Q and M are as above defined, and at least two of the boron, gallium and iron sources are present. Crystallization temperatures are from 100°C to 180°C, preferably from 120°C to 160°C, for times of from 40 hours to 30 days, preferably for 60 hours to about 15 days.

Another way to direct synthesis of the present metallosilicate molecular sieve having a particular crystal structure is to provide seed crystals of the desired structure, e.g. metallosilicate zeolite of ZSM-5 structure, in the reaction mixture initially. This may be facilitated by providing at least about 0.01 percent, preferably at least about 0.1 percent and still more preferably at least about 1 percent seed crystals of the desired metallosilicate (based on total reaction mixture weight).

The metallosilicate crystals prepared by the instant invention can be shaped into a wide variety of particle sizes. Generally speaking, the particles can be in the form of a powder, a granule, or a molded product, such as an extrudate having particle size sufficient to pass through a 2 mesh (Tyler) screen and be retained on a 400 mesh (Tyler) screen. In cases where the catalyst is molded, such as by extrusion, the crystals can be extruded before drying or partially dried and then extruded.

The original alkali or alkaline earth metal cations of the as synthesized acid metallosilicate of the invention can be replaced in accordance with techniques well known in the art, at least in part, by ion exchange with other cations. Preferred replacing cations include metal ions, hydrogen ions, hydrogen precursor, e.g. ammonium ions and mixtures thereof. Preferred metal cations include rare earth metal and metals of Groups IA, IIA, IIIA, IVA, IB, IIB, IIIB, IVB and VIII of the Periodic Table of the Elements.

Typical ion exchange technique would be to contact the synthetic ferroaluminosilicate with a salt of the desired replacing cation or cations. Examples of such salts include the halides, e.g. chlorides, nitrates and sulfates.

It may be desired to incorporate the new metallosilicate crystal with another material resistant to the temperatures and other conditions employed in various organic conversion processes. Such materials include active and inactive materials and synthetic or naturally occurring zeolites as well as inorganic materials such as clays, silica and/or metal oxides, e.g. alumina. The latter may be either naturally occurring or in the form of gelatinous precipitates or gels including mixtures of silica and metal oxides. Use of a material in conjunction with the new ferroaluminosilicate crystal, i.e. combined therewith, which is active, tends to alter the conversion and/or selectivity of the overall catalyst in certain organic conversion processes. Inactive materials suitably serve as diluents to control the amount of conversion in a given process so that products can be obtained economically and orderly without employing other means for controlling the rate of reaction. These materials may be incorporated into naturally occurring clays, e.g. bentonite and kaolin, to improve the crush strength of the catalyst under commercial operating conditions. Said materials, i.e. clays, oxides, etc., function as binders for the catalyst. It may be desirable to provide a catalyst having good crush strength because in commercial use it is desirable to prevent the catalyst from breaking down into powder-like materials. These clay binders have been employed normally only for the purpose of improving the crush strength of the overall catalyst.

Naturally occurring clays which can be composited with the new crystal include the montmorillonite and kaolin families which include the subbentonites, and the kaolins commonly known as Dixie, McNamee, Georgia and Florida clays or others in which the main mineral constituent is halloysite, kaolinite, dickite, nacrite, or anauxite. Such clays can be used in the raw state as originally mined or initially subjected to calcination, acid treatment or chemical modification. Binders useful for compositing with the present crystal also include inorganic oxides, notably alumina.

In addition to the foregoing materials, the crystalline metallosilicate can be composited with a porous matrix material such as silica-alumina, silica-magnesia, silica-zirconia, silica-thoria, silica-beryllia, silica-titania as well as ternary compositions such as silica-alumina-thoria, silica-alumina-zirconia silica-alumina-magnesia and silica-magnesia-zirconia. The relative proportions of finely divided crystalline material and inorganic oxide gel matrix vary widely, with the crystal content ranging from 1 to 90 percent by weight and more usually, particularly when the composite is prepared in the form of beads, in the range of 2 to 80 weight percent of the composite.

Employing a catalytically active form of the metallosilicate material of this invention as a catalyst component, said catalyst possibly containing additional hydrogenation components, reforming stocks can be reformed employing a temperature of from 370°C to 540°C, a pressure of from 791 to 6996 kPa (100 to 1000 psig), preferably from 1480 to 4928 kPa (200 to 700 psig), a liquid hourly space velocity of from 0.1 to 10, preferably from 0.5 to 4, and a hydrogen to hydrocarbon mole ratio of from 1 to 20, preferably from 4 to 12.

A catalyst comprising the present metallosilicate molecular sieve can also be used for hydroisomerization of normal paraffins, when provided with a hydrogenation component, e.g. platinum. Such hydroisomerization is carried out at a temperature of from 90°C to 375°C, preferably from 145°C to 290°C, with a liquid hourly space velocity of from 0.01 to 2, preferably from 0.25 to 0.50, and with a hydrogen to hydrocarbon mole ratio of from 1:1 to 5:1.

Additionally, such a catalyst can be used for olefin or aromatic isomerization, employing a temperature of from about 200°C to about 480°C.

Such a catalyst can also be used for reducing the pour point of gas oils. This reaction is carried out at a liquid hourly space velocity of from about 10 to about 30 and at a temperature of from about 425°C to about 595°C.

Other reactions which can be accomplished employing a catalyst comprising the metallosilicate of this invention containing a metal, e.g. platinum, include hydrogenation-dehydrogenation reactions and desulfurization reactions, olefin polymerization (oligomerization) and other organic compound conversions, such as the conversion of alcohols (e.g. methanol) or ethers (e.g. dimethylether) to hydrocarbons, and the alkylation of aromatics (e.g. benzene) in the presence of an alkylating agent (e.g. ethylene).

In order to more fully illustrate the nature of the invention and the manner of practicing same, the following examples are presented. In the examples, whenever adsorption data are set forth for comparison of sorptive capacities for water, cyclohexane and n-hexane, they were determined as follows:

A weighed sample of the calcined adsorbant was contacted with the desired pure adsorbate vapor in an adsorption chamber, evacuated to 1 mm and contacted with 12 mm Hg of water vapor or 20 mm Hg of n-hexane, or cyclohexane vapor, pressures less than the vapor-liquid equilibrium pressure of the respective adsorbate at room temperature. The pressure was kept constant (within about ± 0.5 mm) by addition of adsorbate vapor controlled by a manostat during the adsorption period, which did not exceed about 8 hours. As adsorbate was adsorbed by the new metallosilicate material, the decrease in pressure caused the manostat to open a valve which admitted more adsorbate vapor to the chamber to restore the above control pressures. Sorption was complete when the pressure change was not sufficient to activate the manostat. The increase in weight was calculated as the adsorption capacity of the sample in g/100 g of calcined adsorbant.

## Example 1

Ferric sulfate, $Fe_2(SO_4)_3 \cdot 7.1H_2O$, 1.85 grams, was dissolved in 46.6 grams of water. Ten grams of concentrated sulfuric acid was added with stirring, followed by a solution of 0.5 gram of boric acid in 35.1 grams of a 29.8% solution of tetrapropylammonium bromide. Sodium sulfate, $Na_2SO_4$, 6.5 grams, was added and dissolved. Finally a mixture of 120.0 grams of sodium silicate (8.9% $Na_2O$, 28.7% $SiO_2$, 200 ppm Al), 69.4 grams of water and 0.3 gram of Daxad 27 (a sodium salt of polymerized substituted benzoid alkyl sulfonic acid combined with an inert inorganic suspending agent) was added with vigorous stirring. The reaction mixture, which had a composition in mole ratios as follows:

$OH^-/SiO_2$ = 0.22
$H_2O/OH^-$ = 99
$SiO_2/Al_2O_3$ = 2440
$SiO_2/Fe_2O_3$ = 164
$SiO_2/B_2O_3$ = 143

9

TPA/(TPA + Na)　　　　= 0.20

was then heated at 100°C for crystallization. The reaction was terminated after 28 days. The product had the X-ray diffraction pattern of ZSM-5 and the crystallinity was 75% compared with an iron-and boron-free reference sample prepared as in U.S. Patent 3,702,886.

The chemical composition of the product metallosilicate was, in wt. %:

$SiO_2$　　　= 82.8
$Al_2O_3$　　= 0.23
$B_2O_3$　　= 0.29
$Fe_2O_3$　　= 1.43
$Na_2O$　　　= 1.48
N　　　　= 0.70
Ash　　　　= 85.4
$SiO_2/(Al_2O_3 + Fe_2O_3 + B_2O_3)$, molar　89.85
$B_2O_3/(Al_2O_3 + Fe_2O_3 + B_2O_3)$, molar　0.271
$Fe_2O_3/(Al_2O_3 + Fe_2O_3 + B_2O_3)$, molar　0.582
$Al_2O_3/(Al_2O_3 + Fe_2O_3 + B_2O_3)$, molar　0.147

The sorption capacities of the solid product calcined at 538°C for 3 hours in air, in g/100g, were:

Cyclohexane, 20 Torr　　6.8
n-Hexane, 20 Torr　　10.2
Water, 12 Torr　　4.5

## Example 2

The reaction mixture for this example was similar to that of Example 1, except that 3.7 grams of $Fe_2(SO_4)_3 \cdot 7.1H_2O$, 8.0 grams of concentrated sulfuric acid and 1.0 grams of boric acid were used. It had a composition in mole ratios as follows:

$OH^-/SiO_2$　　= 0.25
$H_2O/OH^-$　　= 87
$SiO_2/Al_2O_3$　= 2440
$SiO_2/Fe_2O_3$　= 82
$SiO_2/B_2O_3$　= 71
TPA/(TPA + Na)　　　　= 0.20

The product obtained after heating the reaction mixture at 100°C for 40 days had the X-ray diffraction pattern of ZSM-5 and crystallinity was 65% compared with the boron-and iron-free reference sample.

The chemical composition of the product metallosilicate, in wt %, was:

$SiO_2$　　　= 82.3
$Al_2O_3$　　= 0.26
$B_2O_3$　　= 0.13
$Fe_2O_3$　　= 3.0
$Na_2O$　　　= 1.42
N　　　　= 0.63
Ash　　　　= 86.0
$SiO_2/(Al_2O_3 + Fe_2O_3 + B_2O_3)$, molar　59.2
$B_2O_3/(Al_2O_3 + Fe_2O_3 + B_2O_3)$, molar　0.081
$Fe_2O_3/(Al_2O_3 + Fe_2O_3 + B_2O_3)$, molar　0.809
$Al_2O_3/(Al_2O_3 + Fe_2O_3 + B_2O_3)$, molar　0.110

The sorption capacities of the calcined (538°C, 3 hours, air) solid product, in g/100g, were:

Cyclohexane, 20 Torr　　6.3
n-Hexane, 20 Torr　　9.1
Water, 12 Torr　　5.8

Example 3

A 1.85 gram quantity of ferric sulfate, $Fe_2(SO_4)_3 \cdot 7.1\ H_2O$, was dissolved in 46.6 grams of water. Ten grams of concentrated sulfuric acid was added with stirring, followed by a solution of 0.5 gram of boric acid in 35.1 grams of a 29.8% solution of tetrapropylammonium bromide. Sodium sulfate, $Na_2SO_4$, 6.5 grams, was added and dissolved. Finally, a mixture of 120.0 grams of sodium silicate (8.9% $Na_2O$, 28.7% $SiO_2$, 200 ppm Al), 69.4 grams of water and 0.3 grams of the dispersant Daxad 27 was added with vigorous stirring. The reaction mixture, identical in molar composition to that of Example 1, was then heated at 160°C for crystallization. Crystallization was complete after 316 hours.

The product had the X-ray diffraction pattern of ZSM-5 and crystallinity was 90% compared with the reference sample containing no boron or iron.

The chemical composition of the product metallosilicate, in weight %, was:

$SiO_2$ = 85.2
$Al_2O_3$ = 0.24
$B_2O_3$ = 0.52
$Fe_2O_3$ = 1.71
$Na_2O$ = 0.47
N = 1.01
Ash = 88.2
$SiO_2/(Al + B + Fe)_2O_3$, molar 69.2
$B_2O_3/(Al + B + Fe)_2O_3$, molar 0.431
$Fe_2O_3/(Al + B + Fe)_2O_3$, molar 0.432
$Al_2O_3/(Al + B + Fe)_2O_3$, molar 0.137

The sorption capacities of the product solid, calcined at 538°C in air for 3 hours, in g/100g, were:

Cyclohexane, 20 Torr 7.0
n-Hexane, 20 Torr 10.3
Water, 12 Torr 7.0

Example 4

A 3.7 gram quantity of ferric sulfate, $Fe_2(SO_4)_3 \cdot 7.1\ H_2O$, was dissolved in 46.6 grams of water. Eight grams of concentrated sulfuric acid was added with stirring, followed by a solution of 1 gram of boric acid in 35.1 grams of a 29.8% solution of tetrapropylammonium bromide. Sodium sulfate, $Na_2SO_4$, 6.5 grams was added and dissolved. Finally, a mixture of 120.0 grams of sodium silicate (8.9% $Na_2O$, 28.7% $SiO_2$, 200 ppm Al), 69.4 grams of water and 0.3 grams of dispersant Daxad 27 was added with vigorous stirring. The reaction mixture, with a molar composition identical to that of Example 2, was then heated at 160°C for crystallization. Crystallization was complete after 461 hours.

The product had the X-ray diffraction pattern of ZSM-5 and crystallinity was 80% compared with the reference sample containing no boron or iron.

The chemical composition of the product metallosilicate, in weight %, was:

$SiO_2$ = 84.0
$Al_2O_3$ = 0.20
$B_2O_3$ = 0.32
$Fe_2O_3$ = 3.0
$Na_2O$ = 0.70
N = 0.79
Ash = 87.7
$SiO_2/(Al + B + Fe)_2O_3$, molar 55.3
$B_2O_3/(Al + B + Fe)_2O_3$, molar 0.182
$Fe_2O_3/(Al + B + Fe)_2O_3$, molar 0.741
$Al_2O_3/(Al + B + Fe)_2O_3$, molar 0.077

The sorpton capacities of the product solid, calcined at 538°C in air for 3 hours, in g/100g, were:

Cyclohexane, 20 Torr 6.2
n-Hexane, 20 Torr 9.7
Water, 12 Torr 7.6

## Example 5

A 0.75 gram quantity of iron-III sulfate, $Fe_2(SO_4)_3$ $7.1H_2O$ and 45.3 grams of tetrapropylammonium bromide were dissolved in 120 grams of water. A 2 ml solution of gallium chloride containing 0.1 gram Ga/ml, and a solution of 4.5 grams of sodium hydroxide (97.6%) in 52.5 grams of water were added. Finally, 55 grams of Ludox LS (silica sol, 30% $SiO_2$) was added with stirring. The well-mixed reaction mixture was digested at 200°C in a stainless steel autoclave equipped with a Teflon liner. Crystallization was complete after 230 hours. The product was filtered, washed with water until free of bromide and dried at ambient temperature.

The product had the X-ray diffraction pattern of ZSM-5 and crystallinity was 115% compared with a reference sample containing no iron or gallium.

The chemical composition of the product metallosilicate was:

$SiO_2$, wt.% = 83.9
$Al_2O_3$, ppm = 590
$Ga_2O_3$, wt.% = 1.49
$Fe_2O_3$, wt.% = 1.10
$Na_2O$, wt.% = 0.66
N, wt.% = 0.78
Ash, wt.% = 86.0
$SiO_2/(Al + Ga + Fe)_2O_3$, molar 90.8
  Fe/(Al + Ga + Fe), atomic     0.45
  Ga/(Al + Ga + Fe), atomic     0.52

The sorption capacities of the product solid, calcined at 538°C in air for 3 hours, in g/100g, were:

Cyclohexane, 20 Torr     7.7
n-Hexane, 20 Torr     11.9
Water, 12 Torr     6.8

## Example 6

A 2.4 gram quantity of iron-III sulfate, $Fe_2(SO_4)_3$ $7.1H_2O$ and 45.6 grams of tetrabutylammonium bromide were dissolved in 120 grams of water. A 4.7 ml gallium chloride solution containing 0.1 gram Ga/ml and a solution of 5.8 grams of sodium hydroxide (97.6%) in 11 grams of water were added, followed by the addition of 110.5 grams of Ludox LS (silica sol, 30% $SiO_2$), with stirring. The reaction mixture was then heated in a Teflon-lined stainless steel autoclave at 140°C for 450 hours. The product was filtered, washed with water and dried at ambient temperature. It gave the X-ray diffraction pattern of ZSM-11 having 125% crystallinity, relative to a reference sample, and contained a trace of an unidentified crystalline material.

Chemical composition of the product metallosilicate was determined and is listed below: $SiO_2$, wt.% = 79.9
$Al_2O_3$, ppm = 770
$Ga_2O_3$, wt.% = 1.75
$Fe_2O_3$, wt.% = 2.0
$Na_2O$, wt.% = 1.02
N, wt.% = 0.81
Ash, wt.% = 84.8
$SiO_2/(Al + Ga + Fe)_2O_3$, molar 59.0
  Ga/(Al + Ga + Fe), atomic     0.41
  Fe/(Al + Ga + Fe), atomic     0.55

The sorption capacities of the calcined product of this Example, in g/100g, were:

Cyclohexane, 40 Torr     11.6
n-Hexane, 40 Torr     12.1
Water, 12 Torr     11.3

## Example 7

Boric acid, 0.65 gram, and 1.9 grams of iron-III sulfate, $Fe_2(SO_4)_3$ $7.1H_2O$, were dissolved in 50 grams of water. A solution of 3.3 grams of sodium hydroxide in 50 grams of water was added to a solution of 22.8 grams of tetrabutylammonium bromide in 100 grams of water, and the mixed solution was added to the boron-iron solution. Finally, 90 grams of Ludox LS (silica sol, 30% $SiO_2$) was added with stirring. The reaction mixture was heated at 140°C for 235 hours. The crystalline product was filtered, washed with water and dried at ambient temperature.

X-ray analysis of the product solid indicated it to have the structure of ZSM-11.

The chemical composition of the metallosilicate product of this example was:

$SiO_2$(by diff), wt.% = 81.15
$Al_2O_3$, ppm = 455
$B_2O_3$, wt.% = 0.45
$Fe_2O_3$, wt.% = 1.9
$Na_2O$, wt.% = 0.62
N, wt.% = 0.68
Ash, wt.% = 84.4
$SiO_2/(Al + B + Fe)_2O_3$, molar 72.0
$B/(Al + B + Fe)$, atomic 0.34
$Fe/(Al + B + Fe)$, atomic 0.63

The sorption capacities of the calcined product solid, in g/100g, were:

Cyclohexane, 20 Torr 9.2
n-Hexane, 20 Torr 10.7
Water, 12 Torr 5.6

## Example 8

Ten grams of the product crystals of Example 1 was heated in a tube furnace in a nitrogen stream (50 cc $N_2$/min) to 200°C. Ammonia gas (50 cc/min) was added to the nitrogen ($NH_3/N_2$ = 1), and the heating was continued to 600°C. The sample was held at this temperature for one hour and was then cooled to room temperature in the $N_2/NH_3$ atmosphere. The calcined material was treated three times for one hour at 82°C with 500 cc of a solution containing a 0.1 N concentration of ammonium chloride and a 1 N concentration of ammonium hydroxide. The product was filtered, washed with 0.1N $NH_4OH$ until free of chloride, and dried at ambient temperature.

The ammonium exchanged product had the following composition, in weight %:

$SiO_2$ (by diff.) = 92.6
$Al_2O_3$ = 0.30
$Fe_2O_3$ = 1.86
$B_2O_3$ = 0.32
Na = 0.01
N = 0.55
Ash = 95.1
$SiO_2/(Al_2O_3 + Fe_2O_3 + B_2O_3)$, molar 80.5
$B_2O_3/(B_2O_3 + Fe_2O_3 + Al_2O_3)$, molar 0.240
$Fe_2O_3/(B_2O_3 + Fe_2O_3 + Al_2O_3)$, molar 0.607
$Al_2O_3/(B_2O_3 + Fe_2O_3 + Al_2O_3)$, molar 0.153
$N/(B + Fe + Al)$, atomic = 1.02

## Example 9

Ten grams of the Example 7 product was heated in a tube furnace in a nitrogen stream (50 cc $N_2$/min) to 200°C. Ammonia gas (50 cc/min) was added to the nitrogen stream, and the heating was continued to 550°C. The sample was held at this temperature for one hour and was then cooled to room temperature in the $N_2/NH_3$ atmosphere. The calcined material was treated three times for two hours at 71°C with 500 cc of a solution containing 0.1N concentration of sodium hydroxide. The product was filtered, washed with 0.001N NaOH until free of chloride, and dried at ambient temperature.

The sodium form product had the following composition, in weight %:

SiO₂ = 91.6
Al₂O₃, ppm = 930
Fe₂O₃ = 2.43
B₂O₃ = 0.39
Na₂O = 1.62
N = 0.03
Ash = 94.6
SiO₂/(Al₂O₃ + Fe₂O₃ + B₂O₃), molar 70.3
B₂O₃/(Al₂O₃ + Fe₂O₃ + B₂O₃), molar 0.258
Fe₂O₃/(Al₂O₃ + Fe₂O₃ + B₂O₃), molar 0.700
Al₂O₃/(Al₂O₃ + Fe₂O₃ + B₂O₃), molar 0.042
Na/(Al + Fe + B), atomic = 1.20

## Example 10

Six grams of the sodium form product from Example 9 was treated three times for two hours at 71°C with 300 cc of a solution containing a 0.1 N concentration of ammonium chloride and a 0.1 N concentration of ammonium hydroxide. The product was filtered, washed with 0.01 N NH₄OH until free of chloride, and dried at ambient temperature.

The back-exchanged product had the following composition, in wt.%:

SiO₂ = 87.0
Al₂O₃, ppm = 380
Fe₂O₃ = 2.43
B₂O₃ = 0.26
Na, ppm = 40
N = 0.53
Ash = 93.8
SiO₂/(Al₂O₃ + Fe₂O₃ + B₂O₃), molar 75.1
B₂O₃/(Al₂O₃ + Fe₂O₃ + B₂O₃), molar 0.194
Fe₂O₃/(Al₂O₃ + Fe₂O₃ + B₂O₃), molar 0.787
Al₂O₃/(Al₂O₃ + Fe₂O₃ + B₂O₃), molar 0.019
N/(Al + Fe + B), atomic = 0.98
Na/(Al + Fe + B), atomic = 0.005

Although a relatively large amount of boron was lost in this back-exchange, the remaining Al, Fe and B are in the framework of the zeolite (cation/(Al + Fe + B) 1).

## Example 11

A temperature-programmed ammonia desorption (TPAD) test was conducted on product samples from Examples 5 and 6 with the following approximate results (Table) confirming the conclusion that a new type of acid site is unexpectedly formed by the present acid strength-tailoring method.

### Table

| Example Product | 5 | 6 |
|---|---|---|
| TPAD Peak, °C | 330°C | 330°C |
| Width at Half-Height, °C | 143°C | 143°C |

As a reference, it is noted that, at the above conditions for TPAD testing, an aluminosilicate zeolite of ZSM-5 structure prepared as taught in U.S. Patent 3,702,886 exhibits a TPAD peak of 390°C.

This evidence leads to the unexpected result that, at the above-noted conditions for TPAD testing, the acid strength-tailored zeolite of the present invention will exhibit a TPAD peak of less than about 390°C, and depending on the $Fe/(Fe + Al + Ga + B)$, the $Ga/(Fe + Al + Ga + B)$ and the $Al/(Fe + Al + Ga + B)$ atomic ratios of the zeolite, a TPAD peak of from greater than about 300°C to less than about 390°C. Further, at the above-noted TPAD test conditions, the acid strength-tailored zeolite of the present invention will exhibit a TPAD half-height width of less than about 155°C, and depending on the $Fe/(Fe + Al + Ga + B)$, the $Ga/(Fe + Al + Ga + B)$ and the $Al/(Fe + Al + Ga + B)$ atomic ratios of the zeolite, a TPAD half-height width of from greater than about 135°C to less than about 155°C.

## Claims

1. A synthetic crystalline siliceous molecular sieve material having the structure of zeolite ZSM-5, zeolite ZSM-11 or zeolite ZSM-12 and containing aluminum and at least two elements selected from the group consisting of boron, gallium and iron in its anionic framework, said crystalline material having a composition on an anhydrous basis and in terms of moles of oxides per mole of silica expressed the the formula:

$$a\ R_{2/n}O : b\ Fe_2O_3 : c\ B_2O_3 : d\ Ga_2O_3 : e\ Al_2O_3 : SiO_2$$

wherein R is at least one cation having the valence n, and

$a = (1.0\pm0.2)(b + c + d + e)$

$b = 0$ to $0.05$

$c = 0$ to $0.05$

$d = 0$ to $0.05$

$e = 0.00003$ to $0.02$

$b + c + d + e = 0.005$ to $0.05$

$b + c + d$ is not less than $0.00047$

and wherein only one of b, c and d can be 0, and said crystalline material having, when in the ammonium form, a TPAD (temperature-programmed ammonia desorption) peak of from greater than about 300°C to less than about 390°C and a TPAD half-height width from greater than 135°C to less than 155°C.

2. A method for synthesizing a crystalline siliceous molecular sieve material having the structure of zeolite ZSM-5, zeolite ZSM-11 or zeolite ZSM-12 and containing aluminum and at least two or three elements selected from the group consisting of boron, gallium and iron in its anionic framework which comprises

preparing a mixture containing a source of organic cations, a source of silica, a source of alumina, a source of alkali or alkaline earth metal ions, water and sources of oxides of at least two metals selected from the group consisting of boron, gallium and iron, said mixture having a composition, in terms of moles of oxides, within the following ranges:

$OH^-/SiO_2$ = 0.02 to 0.85

$H_2O/OH^-$ = 10 to 800

$SiO_2/Al_2O_3$ = 75 to 100,000

$Q/(Q + M)$ = 0.05 to 0.90

when boron source present,

$SiO_2/B_2O_3$ = 4 to 600

when gallium source present,

$SiO_2/Ga_2O_3$ = 25 to 2,500

when iron source present,

$SiO_2/Fe_2O_3$ = 25 to 2,500

wherein Q represents organic cations and M represents alkali or alkaline earth metal ions,

maintaining said mixture until said crystalline material is formed at a temperature of from 80°C to 200°C for a time of from 40 hours to 30 days, and

recovering said crystalline material having a composition on an anhydrous basis and in terms of moles of oxides per mole of silica expressed by the formula:

$$a\ R_{2/n}O : b\ Fe_2O_3 : c\ B_2O_3 : d\ Ga_2O_3 : e\ Al_2O_3 : SiO_2$$

wherein R is at least one cation having the valence n and

$a = (1.0\pm0.2)(b + c + d + e)$

$b = 0$ to $0.05$

$c = 0$ to $0.05$

$d = 0$ to $0.05$

e = 0.00003 to 0.02

b + c + d + e = 0.0005 to 0.05

b + c + d is not less than 0.00047

and wherein only one of b, c and d can be 0,

and said crystalline material having, when in the ammonium form, a TPAD (temperature-programmed ammonia desorption) peak of from greater than 300°C to less than 390°C and a TPAD half-height width of from greater than 135°C to less than 155°C.

3. The method of Claim 2 wherein said mixture composition is:

OH⁻/SiO₂    0.02 to 0.70

H₂O/OH⁻    10 to 400

SiO₂/Al₂O₃    100 to 100,000

Q/(Q + M)    0.05 to 0.90

when boron source present,

SiO₂/B₂O₃    4 to 300

when gallium source present,

SiO₂/Ga₂O₃    25 to 2,500

when iron source present,

SiO₂/Fe₂O₃    25 to 2,500

and said recovered crystalline material has the structure of zeolite ZSM-5.

4. The method of Claim 2 wherein said mixture composition is:

OH⁻/SiO₂    0.02 to 0.80

H₂O/OH⁻    25 to 800

SiO₂/Al₂O₃    100 to 100,000

Q/(Q + M)    0.05 to 0.80

when boron source present,

SiO₂/B₂O₃    4 to 300

when gallium source present,

SiO₂/Ga₂O₃    25 to 2,500

when iron source present,

SiO₂/Fe₂O₃    25 to 2,500

and said recovered crystalline material has the structure of zeolite ZSM-11.

5. The method of Claim 2 wherein said mixture composition is

OH⁻/SiO₂    0.10 to 0.85

H₂O/OH⁻    20 to 300

SiO₂/Al₂O₃    75 to 100,000

Q/(Q + M)    0.20 to 0.90

when boron source present,

SiO₂/B₂O₃    5 to 600

when gallium source present,

SiO₂/Ga₂O₃    30 to 2,5000

when iron source present,

SiO₂/Fe₂O₃    30 to 2,500

and said recovered crystalline material has the structure of zeolite ZSM-12.

6. The method of any one of Claims 2 to 5 which comprises heating said recovered crystalline material at a temperature of from 370°C to 1100°C.

7. A process for effecting catalytic conversion of an organic compound-containing feedstock which comprises contacting said feedstock under catalytic conversion conditions with a catalyst comprising the crystalline material of Claim 1.

8. A process for effecting catalytic conversion of an organic compound-containing feedstock which comprises contacting said feedstock under catalytic conversion conditions with a catalyst comprising a crystalline material produced by the method of any one of Claims 2 to 6.

# PARTIAL EUROPEAN SEARCH REPORT

which under Rule 45 of the European Patent Convention shall be considered, for the purposes of subsequent proceedings, as the European search report

European Patent Office

Application number

EP 85 30 8175.0

## DOCUMENTS CONSIDERED TO BE RELEVANT

| Category | Citation of document with indication, where appropriate, of relevant passages | Relevant to claim | CLASSIFICATION OF THE APPLICATION (Int. Cl 3) |
|---|---|---|---|
| A | EP - A1 - 0 042 226 (IMPERIAL CHEMICAL INDUSTRIES LTD.)<br>* claim 1 * | 1 | C 01 B 33/28<br>B 01 J 29/28 |
| A | EP - A1 - 0 046 504 (BASF AG)<br>* claim 1 * | 1 | |
| A | EP - A1 - 0 007 081 (BASF AG) | | |
| A | DE - A - 2 831 611 (BASF AG) | | |

TECHNICAL FIELDS SEARCHED (Int. Cl 3)

C 01 B 33/00
B 01 J 29/28

## INCOMPLETE SEARCH

The Search Division considers that the present European patent application does not comply with the provisions of the European Patent Convention to such an extent that it is not possible to carry out a meaningful search into the state of the art on the basis of some of the claims.

Claims searched completely: 1-6
Claims searched incompletely:
Claims not searched: 7, 8
Reason for the limitation of the search:

Claims 7 and 8 are not clear enough to make a meaningful search.

| Place of search | Date of completion of the search | Examiner |
|---|---|---|
| Berlin | 23-07-1986 | CLEMENT |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1505.1 03 82